# EUROPEAN PATENT SPECIFICATION

(11) **EP 2 163 590 B1**
(45) Date of publication and mention of the grant of the patent: **06.07.2011**
(21) Application number: 09156614.1
(22) Date of filing: 30.03.2009
(51) Int. Cl.: C09J 189/00

(54) **Wood adhesives comprising protein and oxazoline polymer or resin**
Holzhaftmittel mit einem Protein- und Oxazolinpolymer oder Harz
Adhésifs pour bois comprenant une protéine et un polymère ou une résine d'oxazoline

(30) Priority: 12.09.2008 US 191901 P
(43) Date of publication of application: 17.03.2010
(73) Proprietor: Rohm and Haas Company, Philadelphia, PA 19106-2399 (US)
(72) Inventor: Brady, Jean M., Maple Glen, PA 19002 (US); Crescimanno, Stephen A., Hatfield, PA 19440 (US); Finch, William C., Ambler, PA 19002 (US); Hsin, Roger, North Wales, PA 19454 (US); Tang, Xun, Dresher, PA 19025 (US)
(74) Representative: Kent, Venetia Katherine

(56) References cited:
- EP-A- 1 908 798
- WO-A-2005/113700
- JP-A- 11 216 704

## Description

The present invention relates to wood adhesive binders comprising a naturally occurring protein component and an oxazoline-functional group containing polymer or resin component, as well as wood composites formed with the wood adhesive binder and finely divided wood. More particularly, it relates to wood adhesive binders comprising the naturally occurring protein component and an oxazoline-functional group containing polymer or resin component in a solids weight ratio of from 60:40 to 98:2 and composites formed therefrom, such as medium density fiberboard (MDF) and low density fiberboard (LDF).

Particle board, chip board and wood composite articles for veneer or laminate furniture or wallboard, and interior flooring applications have generally been formed by binding the wood material with urea formaldehyde (UF) resins or, in some cases, phenol formaldehyde resins. Such resins pose a toxicity hazard both to the workers using them and to end users of articles formed therefrom. This problem is exacerbated because the end products are used inside and can outgas formaldehyde at dangerous levels.

Various attempts have been made to make wood composites from natural binder materials, usually to take advantage of biodegradability of such products. However, such composites are costly to make and provide inferior mechanical properties.

Japan Patent Publication JP2003147309, to Koyo Sangyo Co. Ltd., discloses adhesives made from a blend of an ethylene-vinyl acetate (EVA) emulsion copolymer having carboxylic acid functional groups, a polymer having an oxazoline ring and a starch filler, such as wheat flour, rice powder, and cornstarch. The adhesives provide water resistance to decorative wooden plates and laminates, e.g. decorative veneers. However, the Koyo Sangyo adhesives failed to provide compositions having more than about 30 wt.% of natural materials; hence, the resulting adhesives may not be biodegradable. Further, the compositions comprise about 70 weight % or more of EVA and, thus, cannot provide a cost advantage when compared to compositions of natural materials.

The present inventors have endeavored to solve the problem of providing natural material binders for wood composites that enable one to make formaldehyde free composites having acceptable mechanical properties.

### STATEMENT OF THE INVENTION

In accordance with the present invention, wood adhesive binder compositions comprise a component of one or more naturally occurring protein and a component of one or more an oxazoline-functional group containing polymer or resin in a solids weight ratio of from 60:40 to 98:2.

In another embodiment, the wood adhesive binder compositions comprise an oxazoline-functional group containing polymer or resin component and lignosulfonate, i.e. optionally without the naturally occurring protein component. Such compositions may comprise the oxazoline-functional group containing polymer or resin component and lignosulfonate in a solids weight ratio amount of 1:50 to 3:1.

In the wood adhesive binder compositions as formulated for use, the compositions may comprise from 40 to 98 wt.% of the naturally occurring protein component, preferably, 50 wt.% or more. Preferably, the wood adhesive binder compositions further comprise one or more lignin or lignosulfonate.

To enhance their reactivity, the wood adhesive binder compositions may be formulated at a pH of 4.5 or less, or as low as 2.0 or more. Such compositions can take the form of a one component mixture or a two component mixture.

To retain the fluidity and extend the open time of the wood adhesive binder compositions, they may be formulated a higher pH of 4.5 or more. The reactivity of such wood adhesive binder compositions on heating and/or pressing may be enhanced by adding one or more *in situ* acid generator compound, such as ammonium persulfate.

In those embodiments wherein the compositions comprise both the oxazoline-functional group containing polymer or resin component and lignin or lignosulfonate, the compositions may be formulated as one component or two component mixtures at a pH such as, for example, 4.5 or more, or 6.0 or more, or up to 13.0 Preferably, the wood adhesive binder compositions which comprise lignins and/or lignosulfonate comprise one or more *in situ* acid generator compound, thereby enabling the compositions formulated to cure more rapidly on heating and/or pressing.

Suitable oxazoline-functional group containing polymers or oligomers may be chosen from an oxazoline-functional addition polymer that is made from ethylenically unsaturated oxazoline-functional monomer in the amount of from 10.0 to 100 wt.%, based on polymerization reaction solids, an oxazoline-functional addition oligomer that is made from ethylenically unsaturated oxazoline-functional monomer in the amount of from 10.0 to 100 wt.%, based on polymerization reaction solids, oxazoline-functionalized addition polymer, oxazoline-functionalized addition oligomer, oxazoline-functionalized resin, and mixtures thereof. Suitable oxazoline-functional addition oligomers may have a number average molecular weight (Mn) ranging from 150 to 25,000. As used herein, the term "polymerization reaction solids" refers to all monomers, reactants (e.g. prepolymers) and chain transfer agents used to make a polymer.

Suitable oxazoline resins of the invention generally have greater than 10 wt.% oxazoline. Oxazoline resins are typically water soluble or water dispersible resins.

Oxazoline-functionalized addition polymer or oligomer may be formed from any carboxylic acid-, ester- or nitrile-functional addition polymer or oligomer by reaction with one or more β-hydroxyamine, such as ethanolamine, usually in the presence of a Lewis Acid catalyst.

Preferably, the oxazoline-functional group containing polymers or oligomers are addition emulsion or solution polymers having a glass transition temperature (Tg) of from 0 to 100°C, preferably 45°C or more.

Suitable naturally occuring protein containing materials may contain from 10 to 100 wt.% protein and having an acid content of from 0.1 to 10 meq/g. Suitable naturally occurring proteins may be chosen from soy protein isolate, soy flour, ground flax meal, flax flour, hemp flour, flour from grains, such as those chosen from buckwheat flour, wheat flour, especially from wheat high in gluten, e.g. semolina flour, corn flour, masa, and mixtures thereof. Preferably, the naturally occurring protein is soy flour with 50 wt.% or more of soy protein. Suitable lignins and lignosulfonates of the present invention are water soluble or water dispersible lignin or lignosulfonate with >2 wt% organic acid and/or phenolic functional groups present in their composition.

The present invention further provides wood composites formed from finely divided wood materials and the wood adhesive binder compositions of the present invention in a weight ratio of from 100:1 to 1:1, preferably, 25:1 or less, or, preferably 3:1 or more.

The composites according the present invention may be chosen from chip-particle- or fibre-board, or oriented strand board, such as medium density fiberboard (MDF).

All ranges recited are inclusive and combinable. For example, a proportion of of 40 to 98 wt.%, or 50 wt.% or more, will include ranges of 40 wt.% or more to 50 wt.% or less, 50 wt.% or more to 98 wt.% or less, and 40 wt.% or more to 98 wt.% or less.

Unless otherwise indicated, all pressure units are standard pressure and all temperature units refer to room temperature.

All phrases comprising parenthesis denote either or both of the included parenthetical matter and its absence. For example, the phrase "(co)polymer" includes, in the alternative, polymer, copolymer and mixtures thereof.

As used herein, the term "acrylic polymer" refers to polymers comprising the polymerization product of acrylate and/or methacrylate monomers.

As used herein, the phrase "aqueous" includes water and mixtures comprising water and one or more water-miscible solvent.

As used herein, the phrase "based on the total weight of solids" or "based on total solids" refers to weight amounts in comparison to the weight of the total composition amount of polymer, surfactant, binder, wood particles or chips (excluding moisture contained therein) and any filler or pigment.

As used herein, unless otherwise indicated, the phrase "(co)polymer" includes, independently, copolymers, terpolymers, block copolymers, segmented copolymers, graft copolymers, and any mixture or combination thereof.

As used herein, the term "component" refers to one or more ingredient. Thus, for example, a protein component may comprise soy flour, which is one material, or it may comprise a mixture of soy flour with other protein sources, such as soy protein isolate or wheat gluten.

As used herein, the term "Glass transition temperature" or "Tg" means the temperature at or above which a glassy polymer will undergo segmental motion of the polymer chain. Unless otherwise indicated, the glass transition temperatures of a polymer are calculated using the Fox equation, Bulletin of the American Physical Society 1, 3 Page 123 (1956).

As used herein, the term "(meth)acrylate" means acrylate, methacrylate, and mixtures thereof and the term "(meth)acrylic" used herein means acrylic, methacrylic, and mixtures thereof.

As used herein, the term "oligomer" refers to any molecule that has more than 2 repeat units of any monomer and has two or more oxazoline, acid, nitrile or ester functional groups.

As used herein, the phrase "wt.%" stands for weight percent.

Suitable oxazoline-functional group containing resins can comprise any resin, oligomer, or polymer product having a glass transition temperature (Tg) of from 0 to 150°C, preferably 45 to 75°C, and containing the following functional group: 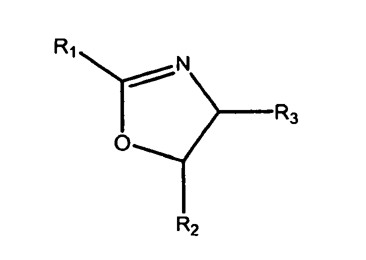 where R₁ denotes any molecule covalently bound to carbon, and where R₂ and R₃ denote hydrogen and/or a monovalent hydrocarbon radical such as H, alkyl, aryl or cycloalkyl.

Suitable oxazoline group containing polymers or oligomers can be prepared by polymerizing the corresponding oxazoline monomers. Suitable oxazoline-functionalized addition polymers or oligomers and oxazoline-functionalized resins can be prepared by functionalizing polymers, oligomers or resins that do not contain oxazoline groups, thereby attaching or forming oxazoline functional groups directly onto suitable polymer or oligomer backbones. In addition, suitable oxazoline functional resins, polymers and oligomers can be extended by reacting them with polyacids, e.g. citric acid, or carboxylic acid functional polymers or oligomers.

Suitable polymers or oligomers may be formed by copolymerizing oxazoline-functional monomers such as isopropenyl oxazoline with another addition monomer to form an addition polymer or oligomer. Suitable emulsion polymers or oligomers may be made from ethylenically unsaturated oxazoline-functional monomers in the amount of from 10.0 to 100 wt.%, preferably 20 to 100 wt.%, based on emulsion copolymer solids. Particularly preferred are monomers containing a 2-oxazoline subgroup as in 2-isopropenyl 2-oxazoline and 2-vinyl 2-oxazoline. Suitable non-oxazoline containing addition monomers may include, for example, acrylates, methacrylates and vinyl monomers, such as styrene. One suitable oxazoline-functional emulsion copolymer may comprise copolymers of methyl methacrylate (MMA), butyl acrylate (BA), 4.0 isopropenyl oxazoline, and allyl methacrylate (AM).

Suitable oxazoline functionalized resins, oligomers and polymers may be formed by condensation and cyclization of one or more β-hydroxyamine or β-hydroxyamine functional polymer, oligomer or resin with one or more carboxylic acid functional polymer, oligomer or resin, e.g. oligo(acrylic acid) or citric acid, nitrile functional polymer, oligomer or resin, e.g. (co)polyacrylonitrile, or ester functional polymer, oligomer or resin, e.g. polymethyl methacrylate. Examples of this embodiment include the reaction of polynitriles with ethanolamine or the condensation and cyclization of polymethyl methacrylate with ethanolamine.

Preferably, oxazoline functionalized resins, oligomers and polymers are prepared through the reaction of one or more suitable β-hydroxyamine, e.g ethanolamine with one or more nitrile containing polymer, oligomer or resin. An example of a suitable oxazoline-functional addition polymer or oligomer is one wherein the oxazoline rings are formed by reacting the nitrile groups in aqueous media with an excess of one or more ethanolamine, optionally in the presence of an excess of an amine, such as ammonia. More preferably, the oxazoline rings in the oxazoline functionalized resins, oligomers and polymers are formed in any nitrile functional group containing polymer, oligomer or resin, by reacting the nitrile groups of the resin or polymer in aqueous media with an excess of one or more β-hydroxyamine, such as ethanolamine, in the presence of an amine and/or a Lewis acid catalyst, e.g. AlCl₃.

In another embodiment, the oxazoline functionalized resins, oligomers and polymers may be formed by cyclization of functional groups already present on the polymer, oligomer or resin (i.e. without the addition of β-hydroxyamine). Examples of this embodiment include the cyclization of poly(2-hydroxymethacrylamide) or poly(2-chloromethacrylamide).

In yet another embodiment, the oxazoline functionalized resins, oligomers and polymers may be formed by or by dehydration of a corresponding β-hydroxyamine group in the polymer, oligomer or resin, which then forms the oxazoline ring. The dehydration methods are milder but may require the use of expensive dehydration agents.

In yet still another embodiment, oxazoline functionalized resins, oligomers and polymers can be prepared by covalently attaching one or more oxazoline-containing resin to a polymer or oligomer, such as an addition polymer or oligomer. Examples of this approach include the reaction of an acid containing polymer with excess bis-oxazoline small molecule or the condensation reaction of a polyaromatic aldehyde oligomer with methyl oxazoline.

Preferably, any polymer, oligomer or resin is functionalized in the absence of water and while removing water of condensation as the oxazoline rings form.

Suitable β-hydroxyamines may include ethanolamine, diethanolamine and triethanolamine.

Suitable nitrile function resins include maleic dinitrile, adipodinitrile oxalodinitrile, butanedinitrile, succinic dinitrile, azelaic dinitrile, terephthalic dinitrile, phthalic dinitrile, and citric trinitrile.

Suitable nitrile functional addition (co)oligomers or polymers that can be oxazoline functionalized include those made by (co)polymerizing (meth)acrylonitrile as a comonomer with other addition monomers.

Suitable carboxylic acid resins are the polycarboxylic acids and oligomers may include, for example, dicarboxylic acids, such as oxalic acid, maleic acid, butanedioic acid, succinic acid, adipic acid, azelaic acid, terephthalic acid and phthalic acid and larger Mw polyesters made from diacids with diols or diepoxies; tricarboxylic acids, such as citric acid and/or polyester reaction products of triols and diacids; and polymeric acids, such as olig(meth)acrylic acids having from greater than 3 acid groups.

The number average molecular weight of the oxazoline-functional addition oligomers may range from 150 to 25,000, or, preferably, 5,000 or less. The number average molecular weight of the oxazoline functionalized polymers may range up to 300,000.

In another embodiment, the molecular weight of oxazoline functional resins or oligomers may be increased by the advancement of polyfunctional oxazoline oligomers or resins with diacids and triacids or other polyacids, e.g. in the presence of a trialkyltin catalyst, or by addition polymerization with a polyacid addition polymer. Suitable carboxylic acids for use in making the oligomers may comprise dicarboxylic acids, tricarboxylic acids, and polymeric acids, as described above.

The wood adhesive binder compositions of the present invention may be formed as an aqueous slurry or dispersion of the naturally occurring protein component and the oxazoline-functional group containing polymer or resin. This composition can be mixed with finely divided wood. Alternatively, in a two component system, one component is chosen from the naturally occurring protein component in dry form, lignins, lignosulfonates, and their mixtures, and the other comprises an aqueous solution or emulsion of the oxazoline-functional group containing polymer or resin. In the two component system, the dry naturally occurring protein component is applied to the finely divided wood and the aqueous solution or emulsion of the oxazoline-functional group containing polymer or resin is applied thereto, such as by spraying.

The wood adhesive binder compositions of the present invention may comprise formulations including ingredients other than the oxazoline-functional group containing polymer or resin component and the naturally occurring protein component. However, the proportion of naturally occurring protein in the wood adhesive binder composition formulation should range 40 wt.% or more, or, preferably, 50 wt.% or more, and up to 98 wt.%.

Formulations of the wood adhesive binder composition may comprise up to 30 wt.%, based on total solids, of one or more polymer or copolymer formed by polymerization of ethylenically unsaturated monomers, such as acrylic polymers made from alkyl (meth)acrylates like methyl methacrylate or butyl acrylate; poly (meth)acrylic acid; vinyl polymers, such as styrene acrylates, vinyl ester polymers, such as polyvinyl acetate and ethylene-vinyl acetate copolymer (EVA), or copolymers of vinylacetate with acrylic monomers; and styrene-butadiene rubber (SBR).

In another embodiment, formulations of the wood adhesive binder composition may be combined with one or more cross-linker shortly before use. Suitable cross-linkers are isocyanates, monomers or polymers containing acetoacetoxy groups, adipic acid, melamine formaldehyde resin, urea formaldehyde resin, melamine salts, aldehydes such as glutaraldehyde, glyoxal, and polymeric aldehydes, such as dialdehyde starches, and complexing agents, such as zirconium salts. Preferably, polymers containing acetoacetoxy groups are used as cross-linker, such as copolymers of acetoacetoxyethyl methacrylate. Suitable amounts of cross-linker may range up to 20 wt.%, or 0.1 wt.% or more.

Formulations of the wood adhesive binder compositions of the present invention can comprise one component or two component systems. The formulations may further comprise additives in the amount of up to 20 wt.%, based on total solids, including natural binders, such as lignins and lignosulfonates, viscosity adjusting agents and fillers, such as kaolin or walnut shell meal, defoamers, biocides and pH adjusting agents. Preferably, the wood adhesive binder further comprises one or more lignosulfonate.

The wood adhesive binder reacts more slowly when formulated at a pH above 4.5. However, lignosulfonates or lignins if used will react with the oxazoline-functional group containing polymer or resin component at a lower pH. To increase cure rates, one can heat the binder system more to compensate for the higher pH.

In wood adhesive binder compositions that do not contain lignosulfonates or lignins, to promote the cure of the wood adhesive binder compositions of the present invention, the pH of the wood adhesive binder can be formulated a pH of 4.5 or less, or, 2.0 or higher. Suitable pH adjusting agents may include polycarboxylic acids, such as citric acid, and mineral acids, such as sulfuric acid. At such a pH, naturally occurring proteins such as soy protein become cationic and a mixture with an oxazoline-functional group containing polymer or resin component will remain stable. The thus protonated oxazoline-functional group containing polymer or resin component will react with the carboxyl functional groups of the naturally occurring protein component. Accordingly, the acid can be added to the wood adhesive binder formulation just prior to use or the acid can be kept separate from the oxazoline-functional group containing polymer or resin in a two component formulation.

To promote reactivity, one or more *in situ* acid generator can be used in any wood adhesive binder compositions formulated at pH of 4.5 or higher. Preferably, *in situ* acid generator may be used to formulate stable fluid one component formulations of the wood adhesive binder compositions comprising lignosulfonate or lignins. Any Such formulations may have a pH of 4.5 or higher, or, preferably, 6.0 or higher, such that the composition would, when applied to wood particles and heated or pressed, generate acid to promote the reaction of the oxazoline-functional group containing polymer or resin component with the naturally occurring protein component and/or lignosulfonate.

Suitable *in situ* acid generator compounds may include metal persulfate salts, ammonium persulfate salts, organic thermal acid generators, e.g. triphenyl sulfonium hexafluoroantimonate, redox catalyst couples such as bisulfite salts mixed with an oxidant, e.g. hydrogen peroxide or persulfate salts, and acid-amine salt compounds. In situ acid generation may be achieved by heating persulfate or the redox couple to generate acid. When using a redox couple, preferably one of the redox pair components is reserved until just before addition to the wood particles to prevent premature acid generation. -

Suitable acid-amine salt compounds may be made by adding amine to water and then adding the acid to the aqueous amine. Examples of the amine may include, for example, ammonia, methylamine, dimethylamine, trimethylamine, ethylamine, diethylamine, triethylamine, butylamine, tributylamine, monoethanolamine, diethanolamine, triethanolamine, diethylethanolamine, ethylenediamine, N, N-dimethylethylenediamine, and morpholine. Examples of the acid may include, for example, inorganic acids, such as phosphoric acid, phosphorous acid, hydrochloric acid, sulfuric acid, nitric acid and the like; and organic sulfonic acids such as methanesulfonic acid, p-toluenesulfonic acid and the like. The acid-amine salt compounds may be added in a total amount of from 0.1 to 15 wt.%, based on the total of binder solids.

In embodiments where the compositions of the present invention comprise lignosulfonate, to insure fluidity of the compositions, the higher the pH the better. A low pH may cause the protonated oxazoline-functional group containing polymer or resin component and the lignosulfonate, which is anionic at the desired formulation pH's with its strong acid groups, to precipitate out. To prevent this, the oxazoline-functional group containing polymer or resin component and lignosulfonate can be formulated as separate components that are not mixed together prior to addition to wood particles, i.e. a two component system.

In an initial test with 10 wt.% aqueous ammonium persulfate, based on total binder solids, as an *in situ* acid generator compound, (a mixture of 62.5 wt.% lignosulfonate and 37.5 wt.% WS-700 based on solids) a board with good performance was achieved. The initial pH of the lignosulfonate/WS-700 blend with 10% ammonium persulfate was 6.2. At press temperatures persulfate has a short half-life for decomposition to sulfate radical anion; then, hydrogen atom abstraction by these radical then generates hydrogen sulfate, a strong acid.

A measure of cured board pH can be obtained by soaking a piece of particle board in a specific weight of water and measuring the pH of the aqueous phase. As measured in this way, the 10% ammonium persulfate gave a board with pH equivalent to that of a board where 4.3 wt% sulfuric acid (based on total binder) was used as a pH adjuster.

The composites according the present invention may be chosen from chip-particle- or fibre- board, and oriented strand board. One example of a suitable fibreboard is medium density fiberboard (MDF).

To make the composites, the wood adhesive binder compositions are mixed with finely divided wood chosen from fibres, chips, or particle materials of one or more different type of wood. As used herein, the term "wood chips" includes chips, shavings, flakes, sawdust particles and any similar finely divided wood based material. The moisture content of suitable finely divided wood material may range from 0 to 20 wt.%, preferably, up to 10 wt.% %, or, more preferably, from 1 to 8 wt.%.

The weight ratio of finely divided wood to wood adhesive binder composition, is suitably from 100:1 to 1:1, preferably, 25:1 or less, or, preferably, 3:1 or more.

The methods for forming composites according to the present invention comprise mixing the wood adhesive binder adhesive composition and the finely divided wood, followed by pressing. The pressing suitably takes place at an elevated temperature. For particle-, chip-, and fibre-board products, the pressing temperature may range from 20 to 250 °C, most preferably from 70 to 200°C. For laminated products, such as laminated flooring or veneered flooring products, the preferred pressing temperature may range from 70 to about 175°C.

The pressing time and pressing temperature are linked so that lower pressing temperatures generally require longer pressing times. The wood based product to be produced also determines suitable pressing temperatures and pressing times. Suitable pressing times may range from 10 s to 60 minutes, or, preferably 30 s or more, or up to 30 minutes, or, most preferably, 1 minute or more, or, up to 5 minutes.

The wood based product of the invention can be a flooring material, a veneered furniture material, a wall panel, or a composite product such as a particle board, fibre board, chip board, oriented strand board. The wood based product of the invention is preferably a veneered furniture material, veneered flooring, laminated flooring or a particle board.

### EXAMPLES

Samples of wood furnish (finely divided wood) were sieved to the isolate material with the desired particle size, large particles were screened out using a #10 mesh screen and fine particles removed using a #60 mesh screen. The wood furnish had a moisture content of approximately 5%.

Particleboard samples were prepared by transferring approximately 360 grams of wood furnish/binder blend (8 wt.% binder on wood solids) to a 280 mm x 280 mm x 64 mm (11' x 11" " x 0.25") aluminum pre-mold sitting on an aluminum plate. A spatula was used to level the contents of the pre-mold, and gentle pressure was applied to the top of the wood furnish/binder blend using a Plexiglas™ (Arkema, Colombes, FR) plastic tamper. The pre-mold was removed leaving aluminum shims (64 mm, 0.25") to control the final board thickness. The assembly was transferred into an automated laboratory hydraulic press (Carver, Model# 4533, Wabash, Indiana). The press platens were held at 180°C, and pressing was achieved using a clamping force of 13600 Kg (30000 lbs) which was maintained for 3 minutes. The pressure was then released and the boards were removed from the press, cooled on a metal table, and then subjected to destructive testing.

Destructive Testing: Boards were first cut into specimens using a bandsaw, such that eight 25 mm x 130 mm (1" x 5") pieces were obtained for flexural strength measurements (measurement of modulus of elasticity, MOE, and modulus of rupture, MOR), four 51 mm x 51 mm (2" x 2") pieces were obtained for thickness swell measurements, and four 51 mm x 51 mm (2" x 2") pieces were obtained for internal bond strength measurements. These tests were done in accordance with ASTM D1037-06a (May 10, 2007). Scrap pieces were used to determine final moisture content of the pressed board, by monitoring water weight loss after 72 hours in a 105°C oven.

### Example 1: Soy Flour/Oxazoline Functional Latex Binder

Binder A: Soy flour/oxazoline functional latex wet blends were prepared by first diluting 30 grams of a commercial oxazoline functional latex comprising the polymerization product of ~20% isopropenyl oxazoline (40 wt.% solids), Epocros™ K-2020E (Nippon Shokubai, Osaka, Japan) with 78 grams water. This mixture was agitated using an overhead stirrer equipped with a propeller stirrer at a speed sufficient to create a vortex and 20 grams of Soy flour (Cargill Prolia 100/90, Minneapolis, Minnesota), was then added portion-wise with stirring to the mixture to make Binder A. The pH of the resulting mixture was 6.5. Water was added to adjust final binder solids to 25%. Blends at different pH's were obtained by adding aqueous solutions of sulfuric acid or sodium hydroxide to the blend prior to final solids adjustment.

A control binder of soy flour alone was prepared in a similar fashion. A standard urea formaldehyde (UF) resin control binder was also prepared by diluting a commercial UF resin (Casco Resin, CR583, (Hexion Specialty Materials, Columbus, Ohio), with water and adding an ammonium chloride (2% based on UF resin solids) acid catalyst; the final solids of the UF control binder was 49.2%.

Particleboard furnish and binder blends were prepared by first charging wood furnish (FP Innovations-Forintek Division, Quebec, Canada) (350 grams) into a kitchen-style mixing bowl. The bowl was placed onto a kitchen mixer (Kitchen Aid, Artisan model, Division of Whirlpool, Benton Harbor, Michigan) and gentle agitation was provided using a 3-blade paddle. The wet blends prepared as above were added using a pipette, so that the final binder solids weight was 8% (based on dry binder weight and dry wood weight). Particleboard samples were prepared and tested as described in the general methods section. Results are shown in Table 1, below.

**TABLE 1**

| **Binder** | **Binder pH** | **Moisture Content %** | **Board Density g/cc** | **MOE MPa (psi)** | **MOR MPa (psi)** | **24 Hr Swell in water,** % | **Internal Bond Strength MPa (psi)** |
|---|---|---|---|---|---|---|---|
| A | 2.0 | 22.4 | 0.85 | 2500 (360000) | 18 (2600) | 38 | 1.2 (170) |
| A | 6.5 | 22.4 | 0.80 | 2100 (310000) | 16 (2300) | 42 | 0.34(50) |
| A | 9.0 | 22.4 | 0.83 | 2000 (300000) | 15 (2200) | 41 | 0.17 (24) |
| A | 12.0 | 22.4 | 0.81 | 2000 (290000) | 14 (2000) | 42 | 0.57 (83) |
| Soy control | | 21.4 | 0.81 | 2000 (290000) | 14 (2000) | 52 | 0.54 (78) |
| UF control | | 17.7 | 0.78 | 2100 (310000) | 16 (2300) | 46 | 1.3 (190) |

As shown in Example 1, even with 67.5 wt.% of soy flour, based on total binder solids, at a formulation pH of 2.0 the wood binder adhesives provide exceptional modulus of elasticity, modulus of rupture and swelling properties, and good bond strength and. Even at a higher formulation pH, the wood binder adhesives provide good modulus of elasticity, modulus of rupture and swelling properties; however, swelling improves at a lower formulation pH.

### Example 2: Soy Flour/Oxazoline Functional Aqueous Solution Polymer Binder

Particleboard furnish/binder blends were prepared by first charging 350 grams of wood furnish (FP Innovations-Forintek Division) and 25 grams of dry soy flour (Cargill Prolia 100/90) into a kitchen-style mixing bowl. The bowl was placed onto a kitchen mixer (Kitchen Aid, Artisan model), and gentle agitation was provided using a 3-blade paddle. Diluted (25%) aqueous sulfuric acid, 0.23 grams, was added to the stirring mixture. To Make Binder B *in situ* with wood, 5.3 grams of a commercial oxazoline functional aqueous solution polymer having an Mn of 2,700 made from polymerization of 50 wt.% of isopropenyl oxazoline, Epocros WS-700 (Nippon Shokubai), was diluted with 54 grams of water and added by pipette to the acidified wood/soy flour mixture. The final mixture contained a binder solids weight of 8% (based on dry binder weight and wood solids weight) with a soy flour to WS-700 dry weight ratio of 95:5. The final moisture content was 17.5%.

In a similar fashion, blends with other ratios of soy flour to WS-700 were prepared. In those blends the final total binder level was maintained at 8% and the moisture content maintained at 17.5%. Sulfuric acid was used at 0.04 gram of 25% solution for every 1 gram of WS-700 used to give a pH of about 3.5. Also in a similar fashion a soy alone control binder was prepared. A blend with a standard urea formaldehyde (UF) resin control binder was also prepared by diluting a commercial UF resin, (Casco Resin, CR583), with water, adding an ammonium chloride (2% based on UF resin solids) acid catalyst; and adding the mixture to wood furnish. Particleboard samples were prepared and tested as described in the general methods section. Results are shown in Table 2, below.

**TABLE 2**

| **Binder** | **Moisture Content** % | **Board Density g/cc** | **MOE MPa (psi)** | **MOR MPa (psi)** | **24 Hr Swell in water,** % | **Internal Bond Strength MPa (psi)** |
|---|---|---|---|---|---|---|
| B | 17.5 | 0.82 | 1700 (250000) | 11 (1600) | 69 | 0.15 (23) |
| 90 Soy Flour 10 WS-700 | 17.5 | 0.79 | 1800 (260000) | 12 (1800) | 66 | 0.21 (30) |
| 85 Soy Flour 15 WS-700 | 17.5 | 0.78 | 2000 (290000) | 14 (2000) | 64 | 0.21 (31) |
| 80 Soy Flour 20 WS-700 | 17.5 | 0.78 | 1900 (280000) | 14 (2000) | 63 | 0.37(53) |
| Soy Flour control | 17.5 | 0.79 | 1800 (260000) | 11 (1700) | 89 | 0.47 (68) |
| UF control | 12.5 | 0.76 | 1300 (180000) | 10 (1500) | 70 | 0.63 (91) |

When formulated with sulfuric acid, the wood adhesive binder of Example 2 exhibits good mechanical and swelling properties even with 80 wt.% and up to 95 wt.% of soy, based on binder solids.

### Example 3: Lignosulfonate/Oxazoline Functional Aqueous Solution Polymer Binder

Particleboard furnish/binder blends were prepared by first charging 350 grams of wood furnish (American Wood Fibers, Columbia, Maryland) into a kitchen-style mixing bowl. The bowl was placed onto a kitchen mixer (Kitchen Aid, Artisan model), and gentle agitation was provided using a 3-blade paddle. Diluted (25%) aqueous sulfuric acid, 4.8 grams, was added to the stirring wood furnish. To make Binder C *in situ* with the wood, 33 grams of Lignosulfonate (Arbo ™ S01 Tembec Inc. Montreal, Canada) and the commercial oxazoline functional aqueous solution polymer, Epocros WS-700 (Nippon Shokubai), 40 grams, were each diluted with about 15 grams of water and added sequentially by pipette to the acidified wood furnish. Binder C contained a binder solids weight of 8% (based on dry binder weight and dry wood weight) with a lignosulfonate to WS-700 dry weight ratio of 62.5:37.5. The final moisture content was approximately 22%.

In a similar fashion a lignosulfonate alone control binder was prepared. A blend with a standard urea formaldehyde (UF) resin control binder was also prepared by diluting a commercial UF resin, (Casco Resin, CR583), with water, adding an ammonium chloride (2% based on UF resin solids) acid catalyst; and adding the mixture to wood furnish. Particleboard samples were prepared and tested as described in the general methods section. Results are shown in Table 3, below.

**TABLE 3**

| **Binder** | **Moisture Content** % | **Board Density g/cc** | **MOE MPa (psi)** | **MOR MPa (psi)** | **24 Hr Swell in water,** % | **Internal Bond Strength MPa (psi)** |
|---|---|---|---|---|---|---|
| C | 22.3 | 0.82 | 2600 (380000) | 16 (2300) | 33 | 0.75 (110) |
| Ligno-sulfonate control | 22.4 | 0.70 | 2100 (310000) | 6.5 (950) | Breaks apart | 0.11 (16) |
| UF control | 12.5 | 0.80 | 1100 (160000) | 11 (1600) | 31 | 0.96 (140) |

The Example 3 binder provides excellent mechanical, swelling and bond strength properties in comparison to the UF control when the formulation comprises an oxazoline functional group containing resin or polymer component and lignosulfonate. As shown in the lignosulfonate control, without the oxazoline functional group containing resin or polymer component, the board disintegrates in water.

## Claims

1. A wood adhesive binder composition comprising a component of one or more naturally occurring protein and a component of one or more an oxazoline-functional group containing polymer or resin in a solids weight ratio of from 60:40 to 98:2.

2. The composition as claimed in claim 1, wherein the composition has a pH of 4.5 or less, or as low as 2.0 or more.

3. The composition as claimed in claim 1, wherein the binder composition comprises one or more *in situ* acid generator compound.

4. The composition as claimed in claim 3, further comprising lignin or lignosulfonate.

5. The composition as claimed in claim 1, wherein the oxazoline-functional group containing polymer or resin component is chosen from an oxazoline-functional addition polymer that is made from ethylenically unsaturated oxazoline-functional monomer in the amount of from 10.0 to 100 wt.%, based on polymerization reaction solids, an oxazoline-functional addition oligomer that is made from ethylenically unsaturated oxazoline-functional monomer in the amount of from 10.0 to 100 wt.%, based on polymerization reaction solids, oxazoline-functionalized addition polymer, oxazoline-functionalized addition oligomer, oxazoline-functionalized resin, and mixtures thereof.

6. The composition as claimed in claim 1, wherein the naturally occurring protein containing material contains from 10 to 100 wt.% protein.

7. The composition as claimed in claim 1, wherein the naturally occurring protein is chosen from soy protein isolate, soy flour, ground flax meal, flax flour, hemp flour, flour from grains, and mixtures thereof.

8. A wood adhesive binder composition comprising component of onr or more lignosulfonate and a component of one or more an oxazoline-functional group containing polymer or resin.

9. A wood composite formed from the wood adhesive binder composition of claim 1 and finely divided wood materials, wherein the weight ratio of the finely divided wood material and the wood adhesive binder ranges from 100:1 to 1:1.

10. A wood composite as claimed in claim 9 chosen from chipboard, particleboard, fibreboard, and oriented strand board.

## Patentansprüche

1. Holzhaftbindemittelzusammensetzung, umfassend eine Komponente aus einem oder mehreren natürlich vorkommenden Protein(en) und eine Komponente aus einem oder mehreren Polymer(en) oder Harz(en), das/die als funktionelle Gruppe Oxazolin enth(ält/alten), in einem Feststoffgewichtsverhältnis von 60:40 bis 98:2.

2. Zusammensetzung nach Anspruch 1, wobei die Zusammensetzung einen pH von 4,5 oder weniger, oder so niedrig wie 2,0 oder mehr aufweist.

3. Zusammensetzung nach Anspruch 1, wobei die Bindemittelzusammensetzung eine oder mehrere *in situ* Säure-erzeugende Verbindung(en) umfasst.

4. Zusammensetzung nach Anspruch 3, weiter umfassend Lignin oder Lignosulfonat.

5. Zusammensetzung nach Anspruch 1, wobei die Polymer- oder Harzkomponente, die als funktionelle Gruppe Oxazolin enthält, aus einem Oxazolin-funktionellen Additionspolymer, das aus ethylenisch ungesättigtem, Oxazolin-funtionellem Monomer in der Menge von 10,0 bis 100 Gew.-%, bezogen auf Polymerisationsreaktionsfeststoffe, hergestellt ist, einem Oxazolin-funktionellen Additionsoligomer, das aus ethylenisch ungesättigtem, Oxazolin-funtionellem Monomer in der Menge von 10,0 bis 100 Gew.-%, bezogen auf Polymerisationsreaktionsfeststoffe, hergestellt ist, Oxazolin-funktionalisiertem Additionspolymer, Oxazolin-funktionalisiertem Additionsoligomer, Oxazolin-funktionalisiertem Harz und Gemischen davon ausgewählt ist.

6. Zusammensetzung nach Anspruch 1, wobei das natürlich vorkommendes Protein enthaltende Material von 10 bis 100 Gew.-% Protein enthält.

7. Zusammensetzung nach Anspruch 1, wobei das natürlich vorkommende Protein aus Sojaproteinisolat, Sojamehl, gemahlenem Flachsmehl, Flachsmehl, Hanfmehl, Mehl aus Getreide und Gemischen davon ausgewählt ist.

8. Holzhaftbindemittelzusammensetzung, umfassend eine Komponente aus einem oder mehreren Lignosulfonat(en) und eine Komponente aus einem oder mehreren Polymer(en) oder Harz(en), das/die als funktionelle Gruppe Oxazolin enth(ält/alten).

9. Holzkomposit, gebildet aus der Holzhaftbindemittelzusammensetzung nach Anspruch 1 und feinverteilten Holzmaterialien, wobei das Gewichtsverhältnis des feinverteilten Holzmaterials und des Holzhaftbindemittels von 100:1 bis 1:1 beträgt.

10. Holzkomposit nach Anspruch 9, ausgewählt aus Spanplatte, Trägerplatte, Faserplatte und gereckter Faserplatte.

## Revendications

1. Composition de liant adhésif pour le bois comprenant un composant d'une ou plusieurs protéines naturelles et un composant d'un ou plusieurs polymères ou résines contenant un groupe oxazoline-fonctionnel dans un rapport en poids de solides de 60 : 40 à 98 : 2.

2. Composition selon la revendication 1, où la composition a un pH de 4,5 ou moins, ou aussi bas que 2,0 ou plus.

3. Composition selon la revendication 1, où la composition de liant comprend un ou plusieurs composés générateurs d'acide *in situ.*

4. Composition selon la revendication 3 comprenant en outre une lignine ou un lignosulfonate.

5. Composition selon la revendication 1, où le composant polymère ou résine contenant un groupe oxazoline-fonctionnel est choisi parmi un polymère d'addition oxazoline-fonctionnel qui est formé à partir d'un monomère oxazoline-fonctionnel éthyléniquement insaturé en la quantité de 10,0 à 100 % en poids, sur la base des solides de la réaction de polymérisation, un oligomère d'addition oxazoline-fonctionnel qui est formé à partir d'un monomère oxazoline-fonctionnel éthyléniquement insaturé en la quantité de 10,0 à 100 % en poids, sur la base des solides de la réaction de polymérisation, un polymère d'addition oxazoline-fonctionnalisé, un oligomère d'addition oxazoline-fonctionnalisé, une résine oxazoline-fonctionnalisée, et leurs mélanges.

6. Composition selon la revendication 1, où le matériau contenant une protéine naturelle contient de 10 à 100 % en poids de protéine.

7. Composition selon la revendication 1, où la protéine naturelle est choisie parmi un isolat de protéines de soja, la farine de soja, la farine de lin broyé, la farine de lin, la farine de chanvre, la farine provenant de grains, et leurs mélanges.

8. Composition de liant adhésif pour le bois comprenant un composant d'un ou plusieurs lignosulfonates et un composant d'un ou plusieurs polymères ou résines contenant un groupe oxazoline-fonctionnel.

9. Composite de bois formé à partir de la composition de liant adhésif pour le bois selon la revendication 1 et de matériaux de type bois finement divisés, où le rapport en poids du matériau de type bois finement divisé et du liant adhésif pour le bois va de 100 : 1 à 1 : 1.

10. Composite de bois selon la revendication 9 choisi parmi un panneau d'agglomérés, un panneau de particules, un panneau de fibres et un panneau à brins orientés.
